## Europäisches Patentamt
## European Patent Office
## Office européen des brevets

(19)

(11) Veröffentlichungsnummer: **0 175 118**
**B1**

(12) **EUROPÄISCHE PATENTSCHRIFT**

(45) Veröffentlichungstag der Patentschrift:
**21.09.88**

(51) Int. Cl.⁴: **C 08 G 63/62**

(21) Anmeldenummer: **85109811.1**

(22) Anmeldetag: **05.08.85**

(54) Verfahren zur Isolierung von thermoplastischen Polycarbonaten aus ihren Lösungen.

(30) Priorität: **16.08.84 DE 3429960**

(43) Veröffentlichungstag der Anmeldung:
**26.03.86 Patentblatt 86/13**

(45) Bekanntmachung des Hinweises auf die Patenterteilung:
**21.09.88 Patentblatt 88/38**

(84) Benannte Vertragsstaaten:
**DE FR GB IT NL**

(56) Entgegenhaltungen:
**DE-C-1 287 734**
**NL-A-129 962**
**US-A-3 022 271**

(73) Patentinhaber: **BAYER AG, Konzernverwaltung RP Patentabteilung, D-5090 Leverkusen 1 Bayerwerk (DE)**

(72) Erfinder: **Meyer, Karl- Heinrich, Dr., Deswatinesstrasse 89, D-4150 Krefeld 1 (DE)**
Erfinder: **Hucks, Uwe, DI., Am Marienstift 30, D-4234 Alpen (DE)**
Erfinder: **Horsthemke, August, Dr., Dörperhofstrasse 16, D-4150 Krefeld 1 (DE)**

EP 0 175 118 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Bei der bekannten Herstellung von thermoplastischen, aromatischen Polycarbonaten nach dem Zweiphasengrenzflächenverfahren fallen die Polycarbonate in der organischen Phase an, aus der sie nach deren Abtrennung und Reinigung isoliert werden müssen. (Siehe beispielsweise H. Schnell, "Chemistry and Physics of Polycarbonates", 1964, Interscience Publishers, New York, London, Sydney, Seiten 41 bis 44).

Für das technisch bedeutsamste Polycarbonat auf Basis von Bisphenol-A bestehen dafür folgende Möglichkeiten: Eine Möglichkeit der Isolierung besteht in dem Ausfällen des Polycarbonats aus seinen Lösungen durch Nichtlösungsmittel (siehe beispielsweise US-A-3 264 262, 3 264 263 und 3 264 264). Als Nichtlösungsmittel ist hierbei unter anderem Toluol genannt.

Die Fällmethode hat den Nachteil, daß die anfallenden Pulver getrocknet und zu rieselfähigem Granulat konfektioniert werden müssen, was bei nicht sachgemäßer Ausfällung Schwierigkeiten verursachen kann. Die Wiedergewinnung des Polycarbonatlösungsmittels sowie der Verlust an Polycarbonat infolge nicht quantitativer Fällung sind verfahrenstechnische Nachteile.

Eine prinzipiell andere Isolierungsmethode führt über das Abdampfen des Lösungsmittels direkt zur Polycarbonatschmelze (siehe beispielsweise US-A-3 022 271, DE-A-1 404 984 und DE-A-1 209 741). Hierbei besteht die Gefahr einer Schädigung des Polycarbonats, da die letzten Reste des Lösungsmittels bei relativ hohen Temperaturen entfernt werden.

Die Reduzierung des Lösungsmittelgehalts von Polycarbonatlösungen kann auch mittels Wasser erfolgen (siehe US-A-3 505 273).

Zur Entfernung von Lösungsmittelresten aus Polycarbonaten kann man auch Monochlorbenzol oder mehrwertige Alkohole oder wäßrige Lösungen dieser mehrwertigen Alkohole den Polycarbonaten in Mengen von 0,1 bis 10 Gew.-% vor deren Extrusion zusetzen (siehe DE-A-2 917 396).

Eine weitere Methode für die Isolierung von Polycarbonat besteht im Kristallisieren von Polycarbonaten aus ihren Lösungen, was durch Einengen der Lösungen bei erhöhter Temperatur und/oder reduziertem Druck begünstigt wird, aber auch durch Zusatz von Nichtlösern (siehe US-Patent 3 112 292, insbesondere Spalte 3, Absatz 3). Als Polycarbonatlösungsmittel werden hier auch unter anderem Benzol, Toluol und Xylol empfohlen, was jedoch nicht für Polycarbonate auf Basis von Bisphenol-A zutrifft, sondern beispielsweise für Polycarbonate aus chlorierten Bisphenolen (siehe Beispiel 4 des US-Patents 3 112 292).

Ähnliche Verfahren sind in den JP-A-78-137297 und Nr. 78-137298 der Mitsubishi Gas beschrieben, worin Polycarbonatlösungen durch Zusätze von Nichtlösungsmitteln modifiziert werden, so daß sie sich verfestigen. Hierbei sind allerdings als Nichtlösungsmittel unter anderem Benzol, Toluol und Xylol genannt, wobei Toluol als besonders geeignetes Nichtlösungsmittel wirksam ist.

Die DE-A-2 825 857 beschreibt ein spezielles Verfahren zur Herstellung von Polycarbonat aus Polycarbonatlösungen, wobei das Lösungsmittel verdampft wird und das anfallende Polycarbonat sogleich pulverisiert wird. Als Lösungsmittel für Polycarbonate sind chlorierte, aliphatische Kohlenwasserstoffe und Pyridin geeignet. Aromatische Kohlenwasserstoffe wie Benzol, Chlorbenzol und Toluol können zugemischt werden, um das Pulverisieren des Polycarbonats zu erleichtern. In den Beispielen wird Toluol mitverwendet.

Eine Weiterentwicklung des Verfahrens des US-Patents 3 112 292 wird im US-A-3 322 724 beschrieben, wo den Polycarbonatlösungen feste Polycarbonate anstelle von Nichtlösungsmitteln zugesetzt werden, um das Auskristallisieren des Polycarbonats zu verursachen. Als Polycarbonatlösungsmittel sind u. a. Benzol, Toluol und Xylol neben anderen genannt, welche sich jedoch wiederum nicht für Polycarbonate auf Basis von Bisphenol-A eignen (siehe dazu etwa die Ausführungsbeispiele von US-PS 3 322 724).

In der DE-A-1 100 949 werden pulverförmige Polycarbonate durch Anquellen von bereits isolierten Polycarbonaten mit wenig organischen Lösungsmitteln hergestellt. Als organische Lösungsmittel sind dabei Benzol, Toluol, Xylol unter anderem genannt, welche jedoch wiederum als Bisphenol-A-Polycarbonat-Nichtlösungsmittel dargelegt sind und somit gemäß dem Verfahren der DE-A-1 100 949 das Bisphenol-A-Polycarbonat nur in Pulver überführen.

Ein weiteres Isolierungsverfahren für Polycarbonate aus ihren Lösungen besteht darin, daß die Polycarbonatlösungen mit Wasserdampf behandelt werden, der das Lösungsmittel praktisch vollständig verdampft (siehe beispielsweise US-A-3 427 370 und EP-A-0 003 996).

Es besteht schließlich auch die Möglichkeit, das Polycarbonat sofort in fester Form herzustellen, wenn man die Umsetzung mit Phosgen in Gegenwart von aromatischen, gegebenenfalls chlorierten Kohlenwasserstoffen, oberflächenaktiven Stoffen und wäßriger Alkalilösung durchführt (siehe JP-A der Kunoshima Chem. Ind. 16907/59 vom 25.5.1959, publiziert am 16.12.1966, Nr. 21472/66).

Alle diese Isolierungsverfahren sind noch mit diesem oder jenem verfahrenstechnischen Nachteil behaftet, so daß nach wie vor ein gewisses Bedürfnis nach Verbesserung des Isolierungsverfahrens für Polycarbonate auf Basis von Bisphenol-A unter Beibehaltung der guten Produktqualität besteht.

Gegenstand der vorliegenden Erfindung ist nun ein Verfahren zur Isolierung von thermoplastischen Polycarbonaten auf Basis von Bisphenol-A aus ihren Lösungen, das dadurch gekennzeichnet ist, daß man die nach dem Phasengrenzflächenverfahren in bekannter Weise hergestellten und gereinigten Polycarbonatlösungen in organischen Lösungsmitteln, vorzugsweise in aliphatischen, chlorierten Kohlenwasserstoffen, mit Dämpfen von Benzol oder Alkylbenzolen behandelt, welche das thermoplastische Polycarbonat auf Basis von Bisphenol-A bei Raumtemperatur schlecht oder nicht lösen und außerdem jeweils einen höheren Siedepunkt haben als das zu verdampfende Lösungsmittel der aus dem Phasengrenzflächenverfahren resultierenden Polycarbonatlösungen, wobei die Behandlung mit den Dämpfen solange durchgeführt wird, bis das zu verdampfende Lösungsmittel bis auf einen Restgehalt von weiniger als 0,5 Gew.-%, vorzugsweise von weniger als 0,1 Gew.-%, bezogen auf Gesamtgewicht des resultierenden Polycarbonat-Benzol- beziehungweise -Alkylbenzol-Gemisches, verdampft ist, und daß man aus dem resultierenden Gemisch das Polycarobonat durch Abdampfen des Benzols beziehungsweise des Alkylbenzols unter Anwendung von Druck in bekannten Apparaturen als Schmelze isoliert.

Gemäß DE-PS-1 287 734 ist ein Verfahren zur Herstellung von Polycarbonatfäden bekannt, wobei das zur Polycarbonatherstellung verwendete Lösungsmittel durch ein höhersiedendes, Schlechtlösungsmittel, welches bei höher Temperatur ein ausgesprochenes Lösungsmittel wird, ersetzt wird. Als solche höhersiedenen Lösungsmittel werden zur halogenierte Kohlenwasserstoffe wie Dichlorpropan und Chlorbenzol genannt bzw. in den Beispielen des DE-PS-1 287 734 benutzt.

Das Verfahren der vorliegenden Erfindung unterscheidet sich vom Verfahren der DE-PS-1 287 734 zum einen, daß das Polycarbonat entweder als Schmelze oder als bröselige Masse anfällt, nicht als Faser, und daß zum anderen "Schlecht-Lösemittel" eingesetzt werden, die auch bei erhöhter Temperatur im Prinzip "Schlecht-Lösungsmittel" bleiben.

Durch die erfindungsgemäße Verwendung von Benzol bzw. Alkylbenzolen wird das zu isolierende Polycarbonat nicht geschädigt und der Restlösungsmittelgehalt nach dem Trocknen sehr niedrig gehalten.

Erfindungsgemäß geeignete Alkylbenzole sind beispielsweise Toluol, Ethylbenzol und die verschiedenen Xylole.

Auch Gemische von Benzol mit Alkylbenzolen sind geeignet. Toluol ist besonders bevorzugt.

"Das thermoplastische Polycarbonat bei Raumtemperatur schlecht oder nicht lösen" im Sinne des erfindungsgemäßen Verfahrens heißt, daß sich das thermoplastische Polycarbonat auf Basis von Bisphenol-A bei Raumtemperatur (20°C) mit weniger als 3 Gew.-%, bezogen auf Gewicht Benzol oder Alkylbenzol, löst.

"Einen höheren Siedepunkt haben" im Sinne des erfindungsgemäßen Verfahrens heißt, daß das Benzol beziehungsweise das jeweils auszuwählende Alkylbenzol mindestens 20°C bei Normaldruck höher sieden muß als das jeweils im Phasengrenzflächenverfahren eingesetzte organische Lösungsmittel.

Die Aufarbeitung der erfindungsgemäß erhaltenen Polycarbonat-Aromaten-Gemische kann ohne Schädigung des Polycarbonats und der Apparatur bei hohen Temperaturen vollständig durch Eindampfen erfolgen. Die erhaltenen Polycarbonate zeichnen sich durch ihre helle Farbe aus.

Geeignete Apparaturen für das erfindungsgemäße Verfahren sind beispielsweise Kolonnen, Blasensäulen oder Rührbehälterkaskaden.

Besonders vorteilhaft führt man das erfindungsgemäße Verfahren kontinuierlich in einer Kolonne durch, in die von unten der Dampf der Aromaten eingeblasen und oben die aus dem Phasengrenzflächenverfahren resultierende Polycarbonatlösung aufgegeben wird. Dem Kolonnensumpf wird kontinuierlich das Polycarbonat-Benzol- bzw. Alkylbenzol-Gemisch entzogen. Am Kolonnenkopf wird kontinuierlich das jeweils verwendete organische Lösungsmittel des Phasengrenzflächenverfahrens dampfförmig entnommen. Der Temperaturverlauf in der Kolonne läßt sich aus der Phasengleichgewichtskurve der jeweiligen organischen Lösungsmittel des Phasengrenzflächenverfahrens und der jeweils verwendeten Aromaten ableiten. Der Temperaturbereich der einzuspeisenden Polycarbonatlösung kann zwischen 20°C und 100°C liegen, der des Dampfes der Aromaten zwischen 80°C und 200°C.

Das jeweilige Temperaturniveau läßt sich durch Anlegen unterschiedlicher Überdrücke verändern.

Zweckmäßigerweise wählt man geringe Überdrücke, so daß die Betriebszustände in den Anlagen nicht an der Grenze zum instabilen Bereich der Gemische liegen.

Bei Polycarbonat auf Basis Bisphenol-A mit dem Austausch Methylenchlorid gegen Toluol genügen Drücke von 1 bis 5 bar absolut. Die Temperaturen betragen an der Eintrittstelle der Polycarbonat-Methylenchlorid-Lösung etwa 41 - 100°C und an der Eintrittstelle des Toluoldampfes etwa 112 - 195°C. Vorzugsweise werden Drücke von 1,5 bis 3 bar absolut eingestellt.

Die Konzentrationen an Polycarbonat in den einzuspeisenden Polycarbonatlösung liegen zwischen 3 und 30 %, vorzugsweise zwischen 10 und 25 %. Sie werden durch die Umwandlung mittels der erfindungsgemäßen Aromatendampfbehandlung in die Polycarbonat-Benzol- beziehungsweise -Alkylbenzol-Gemische normalerweise kaum verändert. Die Konzentrationen können aufgrund der Energiebilanz geringfügig fallen, gleich bleiben oder steigen. Falls erwünscht, besteht die Möglichkeit, durch zusätzliche Energiezufuhr höhere Polycarbonatkonzentrationen in den Polycarbonat-Benzol- bzw. Alkylbenzol-Gemischen einzustellen.

Da die Isolierung des Polycarbonats über Eindampfen erfolgt, kann der anfallende Dampf des Benzols bzw. Alkylbenzols direkt für die Verdampfung des im Phasengrenzflächenverfahren verwendeten organischen Lösungsmittels genutzt werden.

Thermoplastische Polycarbonate auf Basis von Bisphenol-A im Sinne der vorliegenden Erfindung sind solche mit $\bar{M}w$ zwischen 10 000 und 200 000, vorzugsweise zwischen 20 000 und 80 000 ($\bar{M}w$ ermittelt über die Methode der Lichtstreuung).

Polycarbonate auf Basis von Bisphenol-A sind einmal Bisphenol-A-Homopolycarbonat oder solche Bisphenol-A-Copolycarbonate, die trotz Mitverwendung von anderen difunktionellen Komponenten der oben definierten schlechten Löslichkeit bei Raumtemperatur in Benzol oder in Alkylbenzolen von weniger als 3 Gew.-% entsprechen.

Geeignete andere difunktionelle Komponenten sind beispielsweise andere Diphenole als Bisphenol-A wie zum Beispiel 2,2-Bis-(3,5-dibrom-4-hydroxyphenyl)-propan.

Andere difunktionelle Komponenten sind beispielsweise auch Oligomere oder Polymere, die zwei unter den Bedingungen der Polycarbonatsynthese nach dem Phasengrenzflächenverfahren zur Aufbaureaktion befähigte Endgruppen tragen. Solche Endgruppen sind beispielsweise phenolische OH-Gruppen, Chlorkohlensäureestergruppen und Carbonsäurechloridgruppen. Vorgefertigte oligomere oder polymere Blöcke, die die genannten reaktiven Gruppen infolge der Art ihrer Herstellung bereits tragen, oder bei denen man solche Gruppen durch eine geeignete Nachbehandlung erzeugen kann, sind beispielsweise Polycondensate auf Basis von aliphatischen Diolen und gesättigten aliphatischen Dicarbonsäuren, wie beispielsweise gesättigte aliphatische Polyester auf Basis von Dimerfettsäure (siehe beispielsweise US-A-4 430 492 beziehungsweise DE-A-2 935 317) oder auch Polysiloxane (siehe beispielsweise US-A-3 419 634, 3 821 325 und 3 832 419).

Die Herstellung der erfindungsgemäß zu isolierenden thermoplastischen, aromatischen Polycarbonate nach dem Phasengrenzflächenverfahren ist literaturbekannt.

Besonders geeignete Lösungsmittel des Phasengrenzflächenverfahrens, deren Polycarbonatlösungen sich für das erfindungsgemäße Isolierungsverfahren besonders gut eignen, sind insbesondere aliphatische, halogenierte Kohlenwasserstoffe, wie beispielsweise $CH_2Cl_2$ oder 1,1-Dichlorethan. Ganz besonders geeignet ist $CH_2Cl_2$.

Bekannte Apparaturen für das Abdampfen des Benzols beziehungsweise der Alkylbenzole sind beispielsweise Dünnschichtverdampfer und Ausdampfextruder.

Die nach dem erfindungsgemäßen Verfahren isolierten Polycarbonate sind farbhelle Produkte und somit zur Verwendung auf allen Polycarbonatanwendungsgebieten vorteilhaft geeignet.

Sie können in bekannter Weise mit den in der Chemie der thermoplastischen Polycarbonate bekannten Stabilisatoren, Additiven und Füllstoffen versehen werden.

Sie können in bekannter Weise zu den üblichen Polycarbonatformkörpern wie Halbzeug, Platten, Folien und Fasern verformt werden.

**Beispiel 1**

In eine Destillationskolonne mit 200 mm Durchmesser und 3000 mm Höhe werden am Kopf 107 kg/h einer 16,4 %-igen Polycarbonat-Methylenchlorid-Lösung, die nach dem Phasengrenzflächenverfahren hergestellt wurde, aufgegeben. Am Sumpf werden 106 kg/h Toluoldampf eingeleitet. Die Kolonne wird bei Normaldruck betrieben. Im Kolonnenkopf werden 41°C, im Kolonnensumpf 113°C gemessen. Das Destillat enthält 0,43 % Toluol; in dem Polycarbonat-Toluol-Gemisch werden 250 ppm Methylenchlorid gefunden.

Die Polycarbonat-Toluol-Gemisch wird in einen Dünnschichtverdampfer, der unter 1,2 bar Überdruck betrieben wird, gepumpt und es werden 65,5 kg/h Toluol abdestilliert. Das aufkonzentrierte Gemisch wird in einem Ausdampfextruder vom Toluol befreit.

Es wird ein Polycarbonat mit folgenden Kennzahlen erhalten:

| rel. Viskosität (0,5 g in 100 ml Methylenchlorid) | $\eta$ rel. | | 1,307 |
|---|---|---|---|
| verseifbares Chlor | [ppm] | | < 2 |
| phenolisch OH | [%] | | 0,01 |
| anorg. Chlor | [ppm] | | < 2 |
| gesamt Chlor | [ppm] | | < 2 |
| Farbzahl* | | 0,05 | |

*Die Farbzahl ist eine empirische relative Kennziffer. Diese ist so zu definieren, daß 0,05 Einheiten bei einer Prüfstabdicke von 4 mm im Gegenlicht eine visuell unterscheidbare Abstufung ermöglichen.

**Beispiel 2**

Das Beispiel zeigt, in welchem Maße Polycarbonat von Halogenkohlenwasserstoffen bei hohen Temperaturen geschädigt wird.

Es wurden 20 %-ige Polycarbonatlösungen mit verschiedenen Lösungsmitteln über 4 Std. in einem Autoklaven mit einer Werkstoffprobe 1.4571 bei hohen Temperaturen getempert. Danach wurden die Lösungen entnommen, die Lösungsmittel im Vakuumtrockenschrank entfernt und der Polycarbonatfilm zu 5 % in reinem Methylenchlorid gelöst, um über die Farbzahl der Lösung Unterschiede nachzuweisen.

| Lösungsmittel | Temperatur | Hazen-Farbzahl |
|---|---|---|
| Methylenchlorid | 225°C | > 300 |
| Chlorbenzol | 320°C | 80-90 |
| Toluol | 315°C | 20-30 |

Als vorteilhafte Variante des erfindungsgemäßen Verfahrens wurde außerdem gefunden, daß die resultierenden Polycarbonat-Benzol- bzw. Alkylbenzol-Gemische durch Abkühlen verfestigte Gemische liefern, aus denen sich das Benzol beziehungsweise die Alkylbenzole durch Trocknung praktisch quantitativ entfernen lassen.

Gegenstand der vorliegenden Erfindung ist somit auch ein Verfahren zur Isolierung von thermoplastischen Polycarbonaten auf Basis von Bisphenol-A aus ihren Lösungen, das dadurch gekennzeichnet ist, daß man die nach dem Phasengrenzflächenverfahren in bekannter Weise hergestellten und gereinigten Polycarbonatlösungen in organischen Lösungsmitteln, vorzugsweise in aliphatischen, chlorierten Kohlenwasserstoffen, mit Dämpfen von Benzol oder Alkylbenzolen behandelt, welche das thermoplastische Polycarbonat auf Basis von Bisphenol-A bei Raumtemperatur schlecht oder nicht lösen und außerdem jeweils einen höheren Siedepunkt haben als das zu verdampfende Lösungsmittel der aus dem Phasengrenzflächenverfahren resultierenden Polycarbonatlösungen, wobei die Behandlung mit den Dämpfen solange durchgeführt wird, bis das zu verdampfende Lösungsmittel bis auf einen Restgehalt von weniger als 0,5 Gew.-%, vorzugsweise von weniger als 0,1 Gew.-%, bezogen auf Gesamtgewicht des resultierenden Polycarbonat-Benzol- bzw. -Alkylbenzol-Gemisches, verdampft ist, und daß man das resultierende Gemisch, vorzugsweise nach Aufkonzentrierung, verfestigt und danach das Benzol beziehungsweise Alkylbenzol durch Trocknung entfernt.

"Verfestigen" im Sinne des erfindungsgemäßen Verfahrens heißt, daß die nach der Dampfbehandlung erhältlichen flüssigen Polycarbonat-Benzol- bzw. -Alkylbenzol-Gemische durch Absenken der Temperatur und gegebenenfalls zusätzlich durch Absenken des Druckes, wobei ein Verdampfen des Benzols beziehungsweise des Alkylbenzols ausgeschlossen ist, in "halbfeste Dispersionen" übergeführt werden, welche sich in bröselige Massen überführen lassen. Bei diesem Verfestigungsvorgang liegt die Temperatur des Gemisches jeweils unterhalb der Siedetemperatur des Benzols bzw. Alkylbenzols bei dem jeweils angewandten Druck.

Geeignete Apparaturen für das Verfestigen der Polycarbonat-Benzol- bzw. Alkylbenzol-Gemische sind beispielsweise gekühlte Schnecken, gekühlte Kneter, Kühlwalzen und Kühlbänder. Vorzugsweise werden gekühlte Schnecken und gekühlte Kneter benutzt.

Die für die "Verfestigung" geeigneten flüssigen Polycarbonat-Benzol- bzw. -Alkylbenzol-Gemische sollen Konzentrationen von 3 bis 70 Gew.-% Polycarbonat, vorzugsweise von 30 bis 70 Gew.-% Polycarbonat, im Gemisch enthalten.

Diese Konzentrationen werden, wenn erforderlich, in für viskose Lösungen üblichen Eindampfapparaten wie beispielsweise Dünnschichtverdampfern, Mehrphasenwendelrohren und Fallfilmverdampfern durch Abdestillieren des Benzols bzw. des Alkylbenzols eingestellt. Die dabei anzuwendenden Drücke betragen 1 bis 5 bar absolut. Die sich dabei einstellenden Temperaturen ergeben sich aus der Dampfdruckkurve des Benzols bzw. des Alkylbenzols.

Die zerbröselten, halbfesten Polycarbonat-Benzol- bzw. Alkylbenzol-Gemische werden in bekannten Trocknern, wie beispielsweise Teller-, Taumel- und Schaufeltrockner, vom Benzol bzw. Alkylbenzol befreit. Die anzuwendenden Temperaturen liegen zwischen 50 und 220°C, vorzugsweise zwischen 100 und 200°C. Die Trocknungszeiten betragen zwischen 30 und 180 min, vorzugsweise 60 bis 120 min, bei Normaldruck. Durch Anwendung von Vakuum kann die Trocknungsgeschwindigkeit beschleunigt werden.

Vorteilhaft ist, die Trocknung nach einem Temperaturprogramm zu fahren. Darunter wird verstanden, daß die Trocknung zunächst auf einem niedrigen Temperaturniveau zwischen 50 und 140°C, vorzugsweise 100 bis 130°C und danach auf einem höheren Temperaturniveau zwischen 140 und 220°C, vorzugsweise zwischen 160 und 200°C gefahren wird.

Liegen die Konzentrationen der zerbröselten, halbfesten Polycarbonat-Benzol- bzw. Alkylbenzol-Gemische zwischen 3 und 30 Gew.-%, vorzugsweise zwischen 3 und 20 Gew.-%, so kann die Abtrennung einer Teilmenge Benzol bzw. Alkylbenzol vor der Trocknung in Filterpressen erfolgen. Durch diese Maßnahme können Konzentrationen, etwa zwischen 10 und 45 Gew.-%, vorzugsweise zwischen 30 und 40 Gew.-% eingestellt werden.

Verfestigte Polycarbonat-Lösungsmittel-Gemische, die Lösungsmittel wie beispielsweise Methylenchlorid, Chlorbenzol u. a. allein oder gemeinsam oder auch neben Benzol bzw. Alkylbenzolen enthalten, lassen sich nicht durch einen einfachen Trocknungsprozeß praktisch quantitativ davon befreien. Die erfindungsgemäß erhaltenen halbfesten Polycarbonat-Benzol- bzw. Alkylbenzol-Gemische zeigen hier entscheidende Vorteile. Es werden Restgehalte von Benzol bzw. Alkylbenzol erreicht, die unter der Nachweisbarkeitsgrenze liegen.

Die nach der Trocknung erfindungsgemäß erhaltenen Polycarbonate sind weiß aussehende Brösel, die mehr oder weniger pulvrig sein können und praktisch frei von Chlor und Benzol beziehungsweise Alkylbenzol sind. Sie sind zur Verwendung auf allen Polycarbonatanwendungsgebieten vorteilhaft geeignet.

Sie können in bekannter Weise mit den in der Chemie der thermoplastischen Polycarbonate bekannten Stabilisatoren, Additiven und Füllstoffen versehen werden. Sie können in bekannter Weise zu den üblichen Polycarbonatformkörpern wie Halbzeug, Platten, Folien und Fasern verformt werden.

**Beispiel 3**

In einen mit Wasser gekühlten Kneter wird ein gemäß Beispiel 1 gewonnenes, im Dünnschichtverdampfer auf 38 Gew.-% aufkonzentriertes Polycarbonat-Toluol-Gemisch gegeben. Nach wenigen Sekunden beginnt die Verfestigung des Gemisches und nach ca. 60 sec. bröselt die Masse auf. Das Produkt wird anschließend eine Stunde bei 120°C und eine weitere Stunde bei 200°C bei Normaldruck getrocknet. Im Polycarbonat werden < 10 ppm Toluol gefunden. Das Polycarbonat wird in einem Extruder aufgeschmolzen, als Borste abgezogen und granuliert. Das klare Granulat wird zu einem Prüfkörper verspritzt.

**Beispiel 4**

Ein wie im Beispiel 3 aufkonzentriertes Polycarbonat-Toluol-Gemisch wird in eine gleichsinnig rotierende mit Wasser gekühlte Zweiwellenschnecke gegeben. Nach 30 sec. Verweilzeit verläßt das Produkt bröselig die Schnecke. Nach dem Trocknen, wie in Beispiel 3 angegeben, werden < 10 ppm Toluol gemessen. Das Pulver wird zu einem Prüfstab verarbeitet.

**Beispiel 5** (Vergleich)

In einen mit Wasser gekühlten Kneter wird ein flüssiges Polycarbonat-Toluol-Methylenchlorid-Gemisch, das zu 35 Gew.-% aus Polycarbonat, 45 Gew.-% aus Toluol und 20 Gew.-% aus Methylenchlorid besteht, gegeben. Nach ca 120 sec. beginnt das Gemisch sich zu verfestigen, nach weiteren ca. 120 sec. bröselt es auf. Nach dem Trocknen, wie in Beispiel 3 angegeben, werden 255 ppm Toluol und < 10 ppm Methylenchlorid gefunden. Das Produkt wird zu einem Prüfstab verarbeitet.

**Beispiel 6** (Vergleich)

In einen mit Wasser gekühlten Kneter wird eine flüssige, 30 gewichtsprozentige Polycarbonat-Chlorbenzol-Lösung gegeben. Nach ca. 15 min. beginnt die Verfestigung, nach ca. weiteren 5 min. bröselt das Produkt auf. Nach dem Trocknen, wie in Beispiel 3 angegeben, werden 730 ppm Chlorbenzol gefunden. Das Produkt wird zu einem Prüfstab verarbeitet.

**Patentansprüche**

1. Verfahren zur Isolierung von thermoplastischen Polycarbonaten auf Basis von Bisphenol-A aus ihren Lösungen, dadurch gekennzeichnet, daß man die nach dem Phasengrenzflächenverfahren in bekannter Weise hergestellten und gereinigten Polycarbonatlösungen in organischen Lösungsmitteln mit Dämpfen von Benzol oder Alkylbenzolen behandelt, welche das thermoplastische Polycarbonat auf Basis von Bisphenol-A bei Raumtemperatur schlecht oder nicht lösen und außerdem jeweils einen höheren Siedepunkt haben als das zu verdampfende Lösungsmittel der aus dem Phasengrenzflächenverfahren resultierenden Polycarbonatlösungen, wobei die Behandlung mit den Dämpfen solange durchgeführt wird, bis das zu verdampfende Lösungsmittel bis auf einen Restgehalt von weniger als 0,5 Gew.-%, bezogen auf Gesamtgewicht des resultierenden Polycarbonat-Benzol- beziehungsweise -Alkylbenzol-Gemisches, verdampft ist, und daß man aus dem resultierenden Gemisch das Polycarbonat durch Abdampfen des Benzols beziehungsweise des Alkylbenzols unter Anwendung von Druck in bekannten Apparaturen als Schmelze isoliert.

2. Verfahren gemäß Anspruch 1, dadurch gekennzeichnet, daß man Toluoldampf einsetzt.

3. Verfahren gemäß Ansprüchen 1 und 2, dadurch gekennzeichnet, daß man nach dem Phasengrenzflächenverfahren hergestellte Lösungen von Polycarbonat in $CH_2Cl_2$ einsetzt.

4. Verfahren gemäß Ansprüchen 1 bis 3, dadurch gekennzeichnet, daß die Behandlung kontinuierlich in einer Kolonne durchgeführt wird.

5. Verfahren gemäß Ansprüchen 1 bis 4, dadurch gekennzeichnet, daß man das resultierende Polycarbonat-Benzol- bzw. -Alkylbenzol-Gemisch verfestigt und danach das Benzol bzw. Alkylbenzol durch Trocknung entfernt.

6. Verfahren gemäß Anspruch 5, dadurch gekennzeichnet, daß man das resultierende Polycarbonat-Benzol- bzw. -Alkylbenzol-Gemisch nach Aufkonzentrierung auf Konzentrationen von 30 bis 70 Gew.-% verfestigt.

**0 175 118**

**Claims**

1. Process for the isolation of thermoplastic polycarbonates based on bisphenol-A from their solutions, characterised in that the solutions of polycarbonates in organic solvents prepared by the phase interface process and purified in known manner are treated with vapours of benzene or alkylbenzenes in which the thermoplastic polycarbonate based on bisphenol-A is insoluble or only sparingly soluble at room temperature and which have a higher boiling point than the solvent which is to be evaporated from the polycarbonate solutions obtained by the phase interface process, the treatment with the vapours being continued until the solvent to be evaporated has been evaporated off down to a residue of less than 0.5 % by weight, based on the total weight of the resulting mixture of polycarbonate and benzene or polycarbonate and alkylbenzene, and in that the polycarbonate is isolated from the resulting mixture as a melt by evaporation of the benzene or alkylbenzene under pressure in known apparatus.

2. Process according to claim 1, characterised in that toluene vapour is used.

3. Process according to claims 1 and 2, characterised in that solutions of polycarbonate in $CH_2Cl_2$ prepared by the phase interface process are used.

4. Process according to claims 1 to 3, characterised in that the treatment is carried out continuously in a column.

5. Process according to claims 1 to 4, characterised in that the resulting polycarbonate-benzene or -alkylbenzene mixture is solidified and the benzene or alkylbenzene is then removed by drying.

6. Process according to claim 5, characterised in that the resulting mixture of polycarbonate and benzene or alkylbenzene is solidified after increase of the concentration to 30 to 70 % by weight.

**Revendications**

1. Procédé pour isoler des polycarbonates thermoplastiques à base de bisphénol A de leurs solutions, caractérisé en ce qu'on traite les solutions de polycarbonates préparées d'une manière connue par le procédé à l'interface entre phases et purifiées, dans des solvants organiques, avec des vapeurs de benzène ou d'alkylbenzènes qui dissolvent mal ou ne dissolvent pas à la température ambiante le polycarbonate thermoplastique à base de bisphénol A et qui ont toujours en outre un plus haut point d'ébullition que le solvant devant être évaporé des solutions de polycarbonates résultant du procédé à l'interface entre phases, le traitement avec les vapeurs étant effectué jusqu'à ce que le solvant à évaporer ait été évaporé jusqu'à une teneur résiduelle de moins de 0,5 % en poids, par rapport au poids total du mélange résultant polycarbonate-benzène ou polycarbonate-alkylbenzène, et en ce qu'on isole du mélange résultant le polycarbonate à l'état fondu par élimination par évaporation du benzène et respectivement de l'alkylbenzène sous pression dans des appareils connus.

2. Procédé suivant la revendication 1, caractérisé en ce qu'on utilise la vapeur de toluène.

3. Procédé suivant les revendications 1 et 2, caractérisé en ce qu'on utilise des solutions chlorométhyléniques de polycarbonate préparées selon le procédé à l'interface entre phases.

4. Procédé suivant les revendications 1 à 3, caractérisé en ce que le traitement est effectué en continu dans une colonne.

5. Procédé suivant les revendications 1 à 4, caractérisé en ce qu'on solidifie le mélange résultant polycarbonate-benzène ou polycarbonate-alkylbenzène puis on élimine par séchage le benzène ou l'alkylbenzène.

6. Procédé suivant la revendication 5, caractérisé en ce qu'on solidifie le mélange polycarbonate-benzène ou polycarbonate-alkylbenzène résultant après l'avoir concentré à des concentrations de 30 à 70 % en poids.